# EUROPEAN PATENT SPECIFICATION

(11) **EP 0 458 790 B1**
(45) Date of publication and mention of the grant of the patent: **15.11.1995**
(21) Application number: 90900797.3
(22) Date of filing: 20.12.1989
(51) Int. Cl.: B01D 53/26, B01D 53/22, B01D 69/14, B01D 67/00

(54) **A METHOD FOR DRYING OF GASES, ESPECIALLY COMPRESSED AIR, A MEMBRANE FOR CARRYING OUT SAID METHOD AND A PROCESS FOR THE MANUFACTURING OF SAID MEMBRANE**
VERFAHREN ZUR GASTROCKNUNG, INSBESONDERE DRUCKLUFT, MEMBRAN ZUR AUSFÜHRUNG DIESES VERFAHRENS UND VERFAHREN ZUR HERSTELLUNG DER MEMBRAN
PROCEDE DE SECHAGE DE GAZ, NOTAMMENT D'AIR COMPRIME, MEMBRANE DE MISE EN UVRE DUDIT PROCEDE ET PROCEDE DE FABRICATION DE LADITE MEMBRANE

(43) Date of publication of application: 04.12.1991
(73) Proprietor: ATLAS COPCO AIRPOWER N.V., 2610 Wilrijk (BE)
(72) Inventor: GAUGER, Jürgen, CH-1226 Genève (CH)
(74) Representative: Johansson, Lars-Erik
(86) International application number: EP8901610
(87) International publication number: WO9108826

(56) References cited:
- EP-A- 0 077 509
- EP-A- 0 254 758
- EP-A- 0 323 431
- FR-A- 2 079 460
- US-A- 4 230 463

## Description

This invention refers to a membrane for drying of gases, especially compressed air, a method of using said membrane and a process for the manufacturing of said membrane. The membrane comprises a thin membrane coating with a certain separation factor (water vapor - gas) arranged on a membrane support. Gas or air containing water in vapor form is applied to one side of the membrane, the feed side, and due to the separation factor mainly water vapor is permeating to the other side of the membrane, the permeate side.

Traditionally gases, including compressed air, are dried for industrial purposes by means of one of the following methods.

In the refrigeration-drying method the gas or air, containing water in vapor form, is cooled dawn to a temperature at which the water can condense. In this continuous method the condensed water is then taken out of the system in liquid form. By means of this method dew points down to about 1°C could be reached. The equipment needed for carrying out the method in an industrial scale is quite bulky and energy consuming. Moreover the method does not conveniently give the possibility to produce gases with dew points lower than 0°C.

The other commonly used method is an adsorption method. This is a capacitive type drying method making use of certain types of zeolites and other adsorbents like silica gel and activated alumina, which are fine particle materials having a large active surface area.

In a simple realisation of this method the gas or air to be dryed is supplied to a first column or tower containing adsorbent material . The water contained in the gas is hereby adsorbed loading the material with water vapor. At the same time an exhausted second column or tower of the same type is regenerated. Conduits, valves and a control system makes it possible to switch the gas streams between the two vessels. Thereafter the process is repeated. Due to the need of two pressure vessels, valves and the control system adsorber dryers are quite complex and costly.

The regeneration can be done in different ways. One way would be by means of the so called temperature-swing-method (TSA) which means that the temperature of the adsorber-bed in the regeneration phase of the process is increased in order to desorb the humidity. Another way to regenerate the adsorbing material is used in the so called pressure-swing-method (PSA). Instead of raising the temperature in the regeneration phase the adsorbing material is exposed to a lower pressure.

Dew points of -20°C - -40°C or even lower can be obtained by means of this method with zeolites or other adsorbents if the adsorbtion properties of the material is used to its limits. This induces, however, extensive energy losses, in the TSA-method, due to the temperature requirement in the regeneration phase.

In a realisation of a continuous process (Munters dryer)of basically the same idea, the adsorbing material is arranged on the inner surface of coaxial channels in a drum which drum is rotated inside a pressure vessel. The gas-stream to be dryed is arranged to pass inside the channels of one part of the drum whereby the humidity is adsorbed. At the same time the other part of the drum is heated for the desorption of the humidity.

A disadvantage with these methods is that the realisation in an industrial scale is quite bulky. When applying the TSA- or PSA-methods to the drying of compressed air, at least two pressure vessels are needed, in the system installation, including, as mentioned above, the necessary conduits, valves and the control system for switching the flow of the gas through the system. Additionally, these methods imply a considerable energy loss especially in the regeneration phase. In the TSA-method the loss is mainly due to the heating or pressure loss (Munters dryer) and in the PSA-method due to loss of gas.

A neighboring technical field relates to the separation of gases from mixtures of gases by means of membranes. Several methods and corresponding special membranes are known for this purpose.

US-A-4230463, for example, discloses a multicomponent membrane for gas separation, comprising a coating in contact with a porous separation membrane, wherein the separation properties of the multicomponent, or composite, membrane is principally determined by the porous separation membrane as opposed to the material of the coating. This is achieved by chosing a coating material, e.g. from the group polysiloxanes which exhibits less resistance to permeate gas flow than the porous support material, e.g. polysulfone. The support material, however, has a better separation factor and therefore determined the efficiency of the gas separation. Since the support has also a higher resistance to the gas flow, it practically also determines the flux rate. The beneficial effect of the coating is therefore mainly the occlusion of the pinholes and the protection of the polysulfone membrane against damages during handling and assembly in modules. Flux rate and separation factor are the most essential parameters for membranes used for gas separation.

It is also known membranes for gas separation having, as a filler or in a thin top layer on the membrane, active material increasing the separation properties of the membrane. The active material used in this connection is typically zeolites, natural and synthetic.

In the French patent FR-A-2079460 is disclosed a membrane containing natural or synthetic zeolites as filler and a gas separation process making use of this membrane. In this membrane the capacitive properties of the active material is utilised. The process has, as the capacitive processes described above, two phases, one adsorption phase and one regeneration phase. Two different processes are disclosed, one of the batch type in which two different membranes are used and the other of a continuous type making use of only one membrane. In the continuous process the single membrane in the form of a band is physically moved over rollers between two containers one for each of the phases of the process.

Membranes and processes for pervaporation are also known. Such a membrane is disclosed in the European Patent Application EP-A-254758. This membrane comprises an elastomer polymer matrix containing zeolite. The membrane is optimised for the permeation of alcohol, and therefore the zeolites have to be as hydrophobic as possible. In general pervaporation membranes, like other membranes working with liquid feeds, e.g. reverse osmosis membranes, are not defectfree enough to be used for gas separation.

Membrane processes have also been developed for removing water vapor from gas-vapor mixtures. EP-A-308002, e.g. discloses a method and a membrane for this purpose. A cellulose or cellulose acetate film is impregnated with a hygroscopic electrolyte in order to increase the flux rate. Interesting short term performances have been observed with this type of membrane. However, cellulose and cellulose acetate membranes have important drawbacks concerning long term stability. They are e.g. very sensitive to hydrolytic degradation, bacteria growth and crack formation due to large dimentional changes during transitions from the dry to the wet state.

One object of the present invention is to provide a method for drying of gases, especially compressed air by means of a membrane which method is characterised in that gas or air, is arranged to permeate through the membrane from the feed side to the permeate side, in order to transport permeated water vapor away from the permeate side of the thin membrane coating and through the membrane support, thereby creating and maintaining a water vapor partial pressure difference between the feed side and the permeate side of the thin membrane coating, which constitutes the driving force for the permeation of the water vapor through the membrane.
One important advantage with a method according to the invention is that the permeation of gas through the membrane, controlled by the properties of the membrane coating, stabilizes the partial pressure difference between the feed side and the permeate side of the membrane coating without the help of a sweep gas or a vacuum which are the currently used methods.

In the method making use of a sweep gas the permeate side of the membrane is swept with dry air e.g. an expanded part of the dried product air which is fed in a counterflow manner towards the permeate side of the membrane. Hereby an important part of the dried product air is lost which represents a corresponding important loss of energy and moreover the method is not very efficient due to the fact that the dry sweep air only contacts the backside of the membrane support and not the membrane layer itself. Therefore, a diffusion gradient between the feed side membrane and the permeate side support surface is established which diminishes the performance of the membrane.

The method making use of a vacuum on the permeate side of the membrane gives good drying efficiency but is not economic for drying of compressed air in an industrial scale due mainly to the high investment and operation costs of the necessary vacuum pump.

Another object of the invention is to provide a membrane specially designed for being used by said method characterised in that said membrane coating comprises silicon elastomer and 30-90 % of an active filler both the type and and the particle size of the filler being defined according to claim 1.

It is well known that silicone elastomers and especially polydimethylsiloxane (PDMS) has a very high permeability for water vapor. However, a membrane made from unmodified PDMS does not give economically interesting results for the drying of most gases, e.g. compressed air, since the gas (air) loss is too high due to the poor selectivity of the membrane.

The advantages with a membrane according to the invention is that modules and systems for the drying of compressed air can be designed which are less bulky, cheaper, work in a continuous process i.e. without any regeneration and consequently do not need any complex regulation systems and valves.

Further, an essential feature of the membrane according to the invention is that the gas or air which is allowed to permeate the membrane in order to push away the water vapor from the permeate side has a composition close to the product air or gas. A membrane designed for the drying of compressed air e.g. would consequently deliver a product air having a content of oxygen still within the limits prescribed for breathing air. A too high separation of oxygen from the air might cause problems in a number of applications e.g. when the air is to be used by dentists or in other applications in which breathing of the product air is involved.

Further, the membrane according to the invention has a low degree of swelling in contact with water vapor which together with the elastomeric properties of the PDMS is essential in order to avoid crack formation when the dryer is used intermittently. Mechanical properties, even in the hydrated state, reliability and life time are excellent.

A further object of the invention is to provide a method for manufacturing of the membrane according to the invention.

A general problem with the manufacturing of membranes containing fillers is to achieve a homogeneous membrane. The fillers are by necessity small particle, large active surface materials which very easily agglomerate due to considerable internal forces between the particles. If the membrane is thin e.g. in the order of a few particle diameters the homogeneous distribution of the filler is even more difficult.

The method for manufacturing of membranes according to the present invention provides a solution to this problem. In a preferred embodiment the filler is milled in the wet state together with the membrane material and optionally with a hardener for the membrane material and/or a dilution agent. In this way a very homogenous thin membranes could be achieved.

In stead of wet milling high speed agitation under wet conditions could be used.

Further advantages and characteristics of the invention will be apparent from the following description.

As described above the loss of energy, in one or the other form, constitutes an essential drawback with the methods for drying of compressed air. The application of membrane technology to this technical field might seem promising at first sight and the development so far has been in the direction of membranes having higher separation factors water vapor- gas. This means that the build- up of water vapor on the permeate side of the membrane has to be dealt with to maintain the partial pressure difference. The two commonly used methods to do this have already been mentioned above.

The method for drying of gases according to the present invention addresses this problem in a quite different way. In stead of looking for an even more perfect membrane when it comes to the separation factor water vapor- gas in order to allow, if possible, only water vapor to permeate through the membrane, the method according to the invention makes use of a special membrane having a controlled, optimized permeation rate for the gas or air. The amount of gas or air allowed to permeate through the membrane is just enough to transport the permeated water vapor away from the permeate side of the membrane coating and through the support, thus enabling a stabilization of the partial pressure difference over the membrane coating. It has been shown that certain active fillers which limit the air loss maintain or even increase the flux rate for the water vapor.

This means that the process step according to the prior art methods of removing by means of a sweep gas or vacuum the water vapor from the permeate side of the membrane can be abolished.

By chosing certain combinations of parameters of the membrane e.g. flux rate, separation factor etc. by controlling mainly the choise of filler material and the percentage of filler in the membrane layer, a method for drying of gases is created which according to the above gives a dry product air having essentially the same composition as natural air with corresponding advantages.

The frequent start-up and shut-down of compressed air dryers used in industry represents a very tough condition for a membrane dryer. The more or less hydrophilic membrane shrinks and swells frequently which might develop cracks which would cause the dryer module to leak and loose its performance.

Due to the new membrane for drying of compressed air according to the invention in combination with the specially designed new method, according to the following description, membrane technology could be applied with very good long term stability in intermittently operated drying installations.

The specially designed membrane could use as a support material a chemically and mechanically resistant microporous polymer material which could be a commersially available ultrafilter or microfilter of polysulfone, polyethersulfone, polyamide or polypropylene. Said support could be applied in form of flat sheets or hollow fibres.

The diameter of the pores in the case of an ultrafiltration membrane would be about 10 000 to 1 000 000 daltons and between about 0.01 to several micrometer in the case of a microfilter.

In a preferred embodiment a polyamide microfilter with a pore diameter of 0.01 to 1 micrometer was used.

As a material for the coating commercially available liquid silicones on the basis of polydimethylsiloxanes has been used together with liquid hardeners. Such silicones in combination with hardeners are sold for instance by the company DOW CORNING (USA), UNION CARBIDE (USA), WACKER (Germany), RHONE-POULENC (France) and others.

As preferred liquid silicones SYLGARD 182 and 184 (trade marks) from DOW CORNING and RHODORSIL RTV (trade marks) from RHONE-POULENC have been used. At room temperature these silicones harden in some hours and of course much faster at higher temperatures. For RHODORSIL RTV 141 A and RTV 141 B typical hardening times would be at 65°C- 4 hours, at 100°C- 1 hour and at 150°C- 0,5 hours

As filler zeolites, e.g. type 3A, 4A, 5A or 13X could be used as well as other types of absorbents like aluminumphosphates, activated alumina or silica gel. The primary particle size of this type of filler would be around 0,5 to several micrometer.

Zeolites of type A are alkali alumino-silicates of the general formula NA₂O·Al₂O₃·2 SiO₂·xH₂O. While zeolites of the type X are alkali alumino-silicates of the general formula NA₂O·Al₂O₃·2,5·SiO₂·xH₂O.

A zeolite of type 3A, e.g. would adsorb molecules in the center hole with a kinetic diameter up to 3 Angström and so on.

Another type of filler is so called fumed silica. Commercially available products of this kind are marketed under the name AEROSIL by the company DEGUSSA AG (Germany). Several fillers of this type have been tested, like for instance hydrophilic AEROSIL types with relatively low surface area:

| | | |
|---|---|---|
| AEROSIL OX 50 | surface area | 50m² per g |
| AEROSIL MOX 80 | surface area | 80m² per g |
| AEROSIL MOX 90 | surface area | 90m² per g |

Hydrophilic AEROSIL types with high surface area which have been tested are:
AEROSIL 130,150, 200,300,380.

These latter types have a disadvantage at higher filler percentages due to pronounced thickening effect. Larger amounts of solvents have to be used in order to allow the application of membrane formulations using these fillers.

The primary particle size for this type of filler would be 0.007 to 0.04 micrometer and the associated particle size in the range of 1 to 10 micrometer.

In order to achieve the properties of a membrane according to the invention quite high percentages of filler are needed. It has been found that with zeolites and similar adsorbents, as well as fumed silica, between 30 and 90 percent would be appropriate. The range 50 to 80 percent is preferred.

The inventive idea resides in the physical modification of the PDMS used as membrane forming agent by means of an active filler which limits the gas or air loss without significantly reducing the water vapor permeation.

The characteristic of these types of adsorbing material which is normally used, e.g. in the known adsorbtion dryers according to the above, resides in their ability to adsorb in their center hole molecules of certain sizes. The corresponding number in the designation of the zeolite reflects the size of a molecule which could be adsorbed.

It exist types of Munters dryers, in which silica-gel is used to take out the largest part of the water from the air and a zeolite is used to take care of the remaining portion of the water, to achieve a low dew point. The water adsorbed by the zeolite will then be strongly bound.

However, for the purpose of this invention the outside surface of the larger particles is also essential in its interaction with the water vapor. Water molecules adsorbed in a monomolecular layer in the center holes are very strongly bound to the crystals and the energy needed to desorb the water vapor is quite high. For the water adsorbed at the surface of the particles, or in the case of zeolites with larger center holes like e.g. type 13X or 5A, in a second or even third layer within the hole, the energy to desorb this water is much lower.

Thus, when the adsorbed water in the membrane according to the invention is exposed to a decreased partial pressure the first, and in some cases the only, water which is removed is the weakly adsorbed water. The continuous desorbtion in the membrane which creates the flow of water through the same could be explained by this mechanism.

When the percentage of filler of the discussed type , especially the fumed silica, is increased it is a well known fact that the mechanical properties of the thus modified PDMS are improved in relation to the unmodified PDMS, to start with. Above a certain percentage of filler the mechanical properties are then declining again down to the level of the unmodified PDMS to reach levels below this.

Additionally, the filler could be considered to have both an active and a passive effect on the permeation of water vapor and air respectively.

Hydrophilic zeolites and fumed silica have polar groups e.g. OH-groups on the surface of the particles. The water is interacting with these polar surface-groups which creates a preferential transport of the water vapor along the filler-PDMS interface. This is the active effect which would increase with increasing percentage of filler in the PDMS.

On the other hand the oxygen and nitrogen of the air which mainly diffuses through the unmodified PDMS will not interact with the polar groups on the surface of the particles but will see an obstacle for the diffusion in each particle. This means that a higher percentage of filler in the PDMS will more efficiently decrease the permeation of the air through the membrane which means that the passive effect of the filler is increasing with higher percentages as well.

When membranes are modified in order to achieve higher selectivity in a separation process this is generally coupled to a loss of flux. As can be seen from the above the combination of the method and membrane according to the invention makes it possible to raise the selectivity (water vapor-air) as well as maintaining an acceptable water flux or even increasing the flux rate at a working point on the characteristic for the mechanical properties vs. filler-content above or close to values for the unmodified PDMS.

For very high percentages of filler, problems might arise to get a tight membrane without pinholes and other microscopic defects. In such cases and even for somewhat lower percentages it could be of advantage to add a further layer of preferably unmodified PDMS to close pinholes and protect the surface.

Said membrane can be applied in form of spiral wound modules or hollow fiber modules. In the application form of a spiral wound module, the flat composite membrane is rolled up together with appropriate spacer materials according to known methods.

In the application form of hollow fibres, the microporous hollow fibre supports are produced by means of state of the art methods and coated with the filler-PDMS-solvent formulation by dipping the hollow fibre into an appropriate bath.

In case of hollow fibre modules the modules could be prefabricated including the membrane supports and then be flushed with the membrane formulation, preferentially on the inside of the fibres.
The invention also concerns a process for the manufacture of the membranes according to the invention. The technical problem resides in the combination of making a membrane with good mechanical properties despite a high or very high percentage of filler needed to achieve the special permeation properties and the required homogeneity. The application of the filler material to the membrane forming agent is crucial.

When using zeolites and similar adsorber materials as fillers in the membrane the preferred commercially available products in powder form have a primary particle size in the order of 1 micrometer. As mentioned above these small particle, large active surface materials are agglomerated due to considerable internal forces between the particles. Due to the fact that the final thickness of the membrane layer sometimes will be less than the diameter of the agglomerates, it is essential to break up the agglomerates. The process according to the invention specifies in a preferred embodiment wet-milling, which is a known method per se, of the powder in order to obtain adsorber particles in the order of 1 micrometer. The wet milling could be carried out in a solvent like hexane or heptane in for instance a ball-mill made from abrasion resistant ceramic. Heptane is preferred because of higher boiling point which means slower evaporation during the milling operation.

In a preferred embodiment the wet-milling or at least the final part of the same is carried out in the solution of the membrane forming liquid silicone plus a solvent like heptane or hexane.

When using fumed silica and similar adsorber materials as fillers in the membrane, wet-milling could also be used in order to break up the agglomerates. In this case, however, a high speed agitator would be sufficient for the same purpose in stead of the ball mill.

The wet-milling and high speed agitation respectively will have the effect on the agglomerates that they disintegrate and the wet state helps to stabilize the primary particles, especially if the milling process is carried out in the presence of the polymer, which gives the very fine distribution needed to achieve the homogeneous, thin membrane. The polymer has in this case the effect of a protecting colloid. This homogeneous distribution is especially important if the membrane formulation is subsequently diluted for the dipping process.

Thus, by means of the process steps according to the above the liquid membrane coating formulation typically contains a wet milled active filler, a silicone polymer, e.g. polydimethylsiloxane, an appropriate hardener, a solvent, preferably heptane and in some examples a coupling agent, such as bifunctional silanes.

This formulation is now used to achieve the membrane coating on the appropriate support by means of a known method such as dipping or casting.

## Claims

1. A membrane for drying of gases in a continuous process having a thin membrane coating comprising a high surface area filler of fine solid particles dispersed in a membrane matrix of a silicon elastomer arranged on a membrane support of a chemically and mechanically resistant material, **characterised in that** the amount of filler in the membrane coating is between 30 and 90%, preferably 50 to 80%, the filler having a primary particle size in the case of zeolites, aluminumphosphates, activated alumina and silica gel of 0,5 to 5 micrometer and in the case of fumed silica of 0,007 to 0,04 micrometer.

2. A membrane according to claim 1, **characterised in that** the membrane matrix is constituted by a polydimethylsiloxane.

3. A membrane according to claim 2, **characterised in that** the membrane matrix is constituted by a crosslinked polydimethylsiloxane.

4. A membrane according to claim 2, **characterised in that** the membrane support is constituted by a micro-porous polymer material.

5. A membrane according to claim 3, **characterised in that** the micro-porous material is chosen from the group polyamide, polypropylene, polysulfone or polyethersulfone.

6. A membrane according to claim 3, **characterised in that** the membrane support is an ultrafiltration membrane having a diameter of the pores in the range of 10 000 to 1000 000 daltons.

7. A membrane according to claim 3**, characterised in that** the membrane support is a microfilter having a diameter of the pores in the range of 0,01 to 1 micrometer.

8. A membrane according to claim 7, **characterised in that** said active filler is zeolite 3A, potassium-aluminium-silicate (sodalithe structure) or zeolite 4A, sodium-aluminium-silicate (sodalithe structure) or zeolite 5A, calcium-aluminium-silicate (sodalithe structure) or zeolite 13X, sodium-aluminium-silicate (faujasite structure).

9. A membrane according to claim 1, **characterised in that** said high surface area filler is a so called fumed silica like AEROSIL.

10. A membrane according to claim 1, **characterised in that** an additional coating of unmodified PDMS is applied to one side of the membrane.

11. Method for drying of gases in a continuous process by means of a membrane having a thin membrane coating comprising a high surface area filler of fine solid particles dispersed in a membrane matrix of a silicon elastomer arranged on a membrane support, whereby gas containing water in vapor form is applied to one side of the membrane, the feed side, and due to the separation factor of the membrane mainly water vapor is permeating to the other side of the membrane, the permeate side, **characterised in that** water molecules are caused to be reversibly adsorbed on the outer surface of the fine solid particles, dispersed in the membrane coating to an amount of 30 to 90%, preferably 50 to 80%, having a primary particle size in the case of zeolites, aluminumphosphates, activated alumina and silica gel of 0,5 to 5 micrometer and in the case of fumed silica of 0,007 to 0,04 micrometer, in the interface to the membrane matrix and said water molecules being transported by means of permeation through the membrane matrix and repeated adsorbtion and release on the outer surfaces of subsequent particles in the direction of the permeate side, whereby a controlled fraction of the gas on the feed side permeates through the membrane to the permeate side, transporting permeated water vapor away from the permeate side of the thin membrane coating and through the membrane support, thereby maintaining an elevated water vapor partial pressure difference between the feed side and the permeate side of the membrane coating, the fraction of the gas permeated to the permeate side of the membrane being controlled by means of the amount and characteristics of filler in the membrane coating.

12. Method according to claim 1, **characterised in that** the driving force for the permeation of the water vapor is the partial pressure difference between the feed side and the permeate side.

13. A process for manufacturing a membrane for drying of gases, according to claim 1, in a continuous process having a thin membrane coating comprising a high surface area filler of fine solid particles dispersed in a membrane matrix of a silicon elastomer arranged on a membrane support of a chemically and mechanically resistant material comprising the steps of: preparing a liquid elastomer precursor formulation for the elastomer membrane matrix, adding the active filler under stirring to the liquid precursor formulation, applying the mixture on an appropriate support by means of a dipping or casting process and drying the membrane **characterised in that** in order to break apart the agglomerates of the active filler caused by the forces between the particles of the filler, said filler is pre-mixed with at least part of the liquid precursor in a wet-milling process.

14. A process according to claim 13, **characterised in that** said part of the liquid precursor comprises a solvent.

## Patentansprüche

1. Membrane zum Trocknen von Gasen in einem kontinuierlichen Verfahren, mit einer dünnen Membranbeschichtung, die einen Füllstoff aus feinen festen Partikeln mit großer Oberfläche umfaßt, der in einer Membranmatrix aus einem Siliconelastomer dispergiert ist, welches auf einem Membranträger aus einem chemisch und mechanisch resistenten Material angeordnet ist, **dadurch gekennzeichnet**, daß die Menge des Füllstoffes in der Membranbeschichtung zwischen 30 und 90%, vorzugsweise bei 50 bis 80% liegt, der Füllstoff bei Zeolithen, Aluminiumphosphaten, aktiviertem Aluminiumoxid und Silicagel eine Primärpartikelgröße von 0,5 bis 5 Mikrometer und bei gerauchtem Siliciumdioxid von 0,007 bis 0,04 Mikrometer hat.

2. Membrane nach Anspruch 1, **dadurch gekennzeichnet**, daß die Membranmatrix aus einem Polydimethylsiloxan aufgebaut ist.

3. Membrane nach Anspruch 2, **dadurch gekennzeichnet**, daß die Membranmatrix aus einem vernetzten Polydimethylsiloxan aufgebaut ist.

4. Membrane nach Anspruch 2, **dadurch gekennzeichnet**, daß der Membranträger aus einem mikroporösen Polymer aufgebaut ist.

5. Membrane nach Anspruch 3, **dadurch gekennzeichnet**, daß das mikroporöse Material aus der Gruppe bestehend aus Polyamid, Polypropylen, Polysulfon oder Polyethersulfon ausgewählt wird.

6. Membrane nach Anspruch 3, **dadurch gekennzeichnet**, daß der Menbranträger eine Ultrafiltermembran mit einem Porendurchmesser im Bereich von 10.000 bis 1.000.000 Dalton ist.

7. Membrane nach Anspruch 3, **dadurch gekennzeichnet**, daß der Membranträger ein Mikrofilter mit einem Porendurchmesser im Bereich 0,01 bis 1 Mikrometer ist.

8. Membrane nach Anspruch 7, **dadurch gekennzeichnet**, daß der genannte aktive Füllstoff Zeolith 3A, Kalium-Aluminium-Silicat (Sodalithstruktur) oder Zeolith 4A, Natrium-Aluminium-Silicat (Sodalithstruktur) oder Zeolith 5 A, Calcium-Aluminium-Silickat (Sodalithstruktur) oder Zeolith 13X, Natrium-Aluminium-Silicat (Faujasitstruktur) ist.

9. Membrane nach Anspruch 1, **dadurch gekennzeichnet**, daß der genannte Füllstoff mit großer Oberfläche sogenanntes gerauchtes Siliciumdioxid, beispielsweise AEROSIL, ist.

10. Membrane nach Anspruch 1, **dadurch gekennzeichnet**, daß auf einer Membranseite eine zusätzliche Beschichtung aus unverändertem PDMS aufgebracht wird.

11. Verfahren zum Trocknen von Gasen in einem kontinuierlichen Prozeß mit Hilfe einer Membrane, die über eine dünne Membranbeschichtung mit einem Füllstoff mit großer Oberfläche aus feinen festen Partikeln verfügt, der in einer Membranmatrix aus einem Siliconelastomer dispergiert sind, das auf einem Membranträger angeordnet ist, wodurch Gas, das Wasser in Form von Dampf enthält, auf einer Seite der Membrane, der Aufgabeseite, zugeführt wird und aufgrund des Trennfaktors der Membrane hauptsächlich Wasserdampf auf die andere Seite der Membrane, die Permeatseite, durchdringt, **dadurch gekennzeichnet**, daß die Wassermoleküle reversibel auf der äußeren Oberfläche der feinen festen Partikel adsorbiert werden, die in der Membranbeschichtung zu 30 bis 90%, vorzugsweise 50 bis 80%, dispergiert sind, bei Zeolithen, Aluminiumphosphaten, aktiviertem Aluminiumoxid und Silicagel eine Primärpartikelgröße von 0,5 bis 5 Mikrometer und bei gerauchtem Siliciumdioxid von 0,007 bis 0,04 Mikrometer an der Grenzfläche zur Membranmatrix aufweisen, und die genannten Wassermoleküle mittels Permeation durch die Membranmatrix und wiederholte Adsorption und Freisetzung auf den äußeren Oberflächen der nachfolgenden Partikel in Richtung der Permeatseite transportiert werden, wodurch ein kontrollierter Anteil des Gases von der Aufgabeseite durch die Membrane auf die Permeatseite durchdringt, durchgedrungener Wasserdampf von der Permeatseite der dünnen Membranbeschichtung weg und durch den Membranträger transportiert wird, um dadurch eine erhöhte Wasserdampf-Teildruckdifferenz zwischen der Aufgabeseite und der Permeatseite der Membranbeschichtung aufrechtzuerhalten, wobei der Anteil des zur Permeatseite der Membran durchgedrungenen Gases durch die Menge und die Eigenschaften des Füllstoffes in der Membranbeschichtung kontrolliert wird.

12. Verfahren nach Anspruch 1, **dadurch gekennzeichnet**, daß die treibende Kraft für die Permeation des Wasserdampfs die Teildruckdifferenz zwischen der Aufgabeseite und der Permeatseite ist.

13. Verfahren zur Herstellung einer Membrane zum Trocknen von Gasen in einem kontinuierlichen Prozeß nach Anspruch 1, mit einer dünnen Membranbeschichtung, die einen Füllstoff aus feinen festen Partikeln mit großer Oberfläche umfaßt, die in einer Membranmatrix aus einem Siliconelastomer dispergiert sind, welches auf einem Membranträger aus einem chemisch und mechanisch resistenten Material angeordnet ist, folgende Schritte umfassend: Zubereiten einer Vorläuferformulierung aus flüssigem Elastomer für die Elastomer-Membranmatrix, Zugeben des aktiven Füllstoffes zu der flüssigen Vorläuferformulierung bei gleichzeitigem Rühren, Aufbringen der Mischung auf einem entsprechenden Träger mit Hilfe eines Tauch- oder Gießverfahrens und Trocknen der Membrane, **dadurch gekennzeichnet**, daß der genannte Füllstoff mit zumindest einem Teil des flüssigen Vorläufers in einem Naßmahlverfahren vorgemischt wird, um die Zusammenballungen des aktiven Füllstoffes, die durch die Kräfte zwischen den einzelnen Füllstoffpartikeln entstehen, aufzubrechen.

14. Verfahren nach Anspruch 13, **dadurch gekennzeichnet**, daß der genannte Teil des flüssigen Vorläufers ein Lösungsmittel enthält.

## Revendications

1. Membrane pour le séchage de gaz dans un procédé continu, comportant un revêtement de membrane mince comprenant un produit de remplissage à grande zone de surface constitué par des particules solides fines dispersées dans une matrice de membrane en élastomère de silicium disposé sur un support de membrane en matériau chimiquement et mécaniquement résistant, caractérisée en ce que la proportion de produit de remplissage dans le revêtement de membrane est compris entre 30 % et 90 %, de préférence entre 50 % et 80 %, le produit de remplissage ayant une taille de particules primaires de 0,5 à 5 micromètres (0,5 à 5 x 10⁻⁶m) dans le cas de zéolites, de phosphates d'aluminium, d'alumine activée et de gel de silice, et de 0,007 à 0,04 micromètre dans le cas de fumée de silice (0,007 à 0,04 x10⁻⁶m).

2. Membrane selon la revendication 1, caractérisée en ce que la matrice de membrane est constituée par un polydiméthylsiloxane.

3. Membrane selon la revendication 2, caractérisée en ce que la matrice de membrane est constituée par un polydiméthylsiloxane réticulé.

4. Membrane selon la revendication 2, caractérisée en ce que le support de membrane est constitué par un matériau polymère microporeux.

5. Membrane selon la revendication 3, caractérisée en ce que le matériau microporeux est choisi dans le groupe comprenant le polyamide, le polypropylène, le polysulfone ou le polyéthersulfone.

6. Membrane selon la revendication 3, caractérisée en ce que le support de membrane est une membrane d'ultrafiltrage ayant un diamètre de pores se situant dans la plage de 10 000 à 1 000 000 daltons.

7. Membrane selon la revendication 3, caractérisée en ce que le support de membrane est un microfiltre ayant un diamètre de pores se situant dans la plage de 0,01 à 1 micromètre (o,01 à 1 x 10⁻⁶m).

8. Membrane selon la revendication 7, caractérisée en ce que le produit de remplissage actif est de la zéolite 3A, du silicate de potassium-aluminium (structure sodalithe) ou de la zéolite 4A, du silicate de sodium-aluminium (structure sodalithe) ou de la zéolite 5A, du silicate de calcium-aluminium (structure sodalithe) ou de la zéolite 13X, ou du silicate de sodium-aluminium (structure faujasite).

9. Membrane selon la revendication 1, caractérisée en ce que le produit de remplissage à grande zone de surface est ce qu'on appelle une fumée de silice telle que l'AEROSIL.

10. Membrane selon la revendication 1, caractérisée en ce qu'un revêtement supplémentaire de PDMS non modifié est appliqué sur un côté de la membrane.

11. Procédé de séchage de gaz dans un processus continu au moyen d'une membrane comportant un revêtement de membrane mince comprenant un produit de remplissage à grande zone de surface constitué de particules solides fines dispersées dans une matrice de membrane en élastomère de silicium disposé sur un support de membrane, de façon que du gaz contenant de l'eau sous forme de vapeur soit appliqué sur un côté de la membrane ou côté alimentation et que, du fait du facteur de séparation de la membrane, on laisse passer principalement de la vapeur d'eau de l'autre côté de la membrane ou côté transmission, caractérisé en ce que les molécules d'eau sont amenées à être adsorbées de manière réversible sur la surface extérieure des particules solides fines dispersées dans le revêtement de membrane en proportion de 30 % à 90 %, de préférence de 50 % à 80 %, avec une taille de particules primaires de 0,5 à 5 micromètres (0,5 à 5 x 10⁻⁶m) dans le cas de zéolites, de phosphates d'aluminium, d'alumine activée et de gel de silice, et de 0,007 à 0,04 micromètre (0,007 à 0,04 x 10⁻⁶m) dans le cas de fumée de silice, dans l'interface avec la matrice de membrane, les molécules d'eau étant transportées par transmission à travers la matrice de membrane avec adsorption et libération répétées sur les surfaces extérieures des particules suivantes dans la direction du côté transmission, de sorte qu'une fraction contrôlée du gaz du côté alimentation passe à travers la membrane vers le côté transmission, et à transporter la vapeur d'eau de transmission en l'évacuant du côté transmission du revêtement de membrane mince et en la faisant passer à travers le support de membrane, ce qui permet ainsi de maintenir une différence de pression partielle de vapeur d'eau élevée entre le côté alimentation et le côté transmission du revêtement de membrane, la fraction de gaz transmise vers le côté transmission de la membrane étant contrôlée par la quantité et les caractéristiques du produit de remplissage dans le revêtement de membrane.

12. Procédé selon la revendication 1, caractérisé en ce que la force d'entraînement pour la transmission de la vapeur d'eau à travers la membrane est la différence de pression partielle entre le côté alimentation et le côté transmission.

13. Procédé de fabrication d'une membrane pour le séchage de gaz selon la revendication 1, dans un processus continu, comportant un revêtement de membrane mince comprenant un produit de remplissage à grande zone de surface constitué de particules solides fines dispersées dans une matrice de membrane en élastomère de silicium disposé sur un support de membrane en matériau chimiquement et mécaniquement résistant, comprenant les étapes consistant à : préparer une formule de précurseur d'élastomère liquide pour la matrice de membrane élastomère, ajouter le produit de remplissage actif tout en agitant la formule de précurseur liquide, appliquer le mélange sur un support approprié au moyen d'un processus d'immersion ou de coulée, et sécher la membrane, caractérisé en ce que, pour briser en morceaux les agglomérations du produit de remplissage actif aggloméré par les forces existant entre les particules de ce produit de remplissage, celui-ci est prémélangé avec une partie au moins du précurseur liquide dans un processus de moulage humide.

14. Procédé selon la revendication 13, caractérisé en ce que la partie de précurseur liquide comprend un solvant.
